# EUROPEAN PATENT APPLICATION

(11) **EP 4 848 529 A1**
(43) Date of publication of application: **02.12.2026**
(21) Application number: 26173181.4
(22) Date of filing: 17.04.2026
(51) Int. Cl.: H02J 7/42, H02J 7/45, H02J 7/50, H02J 7/70, G06F 1/16, G06F 1/18, G06F 1/26, H02J 7/82, H02J 7/92

(54) **A CHARGING MANAGEMENT SYSTEM AND A METHOD THEREOF**

(30) Priority: 31.05.2025 CN 202510725390
(71) Applicant: Hand Held Products, Inc., Fort Mill, SC 29707 (US)
(72) Inventor: NIU, Yihua, 28202 Charlotte (US); SAUERWEIN, James T., 28202 Charlotte (US); DUAN, Licong, 28202 Charlotte (US); YONGMING, Pan, 28202 Charlotte (US)
(74) Representative: Haseltine Lake Kempner LLP

(57) **Abstract**

A system is disclosed. The system comprises a charging dock having a plurality of charging slots configured to be connected to a plurality of devices, each device has one or more charging parameters. A server comprises a memory and at least one processor configured to receive device parameters, determine a charging dock maximum simultaneous load, wherein the charging dock maximum simultaneous load is a count of the plurality of devices and a maximum charging power for each of the plurality of devices, determine whether the charging dock maximum simultaneous load exceeds a maximum output power of the charging dock, determine one or more adjustments to the one or more charging parameters to minimize an overall charge time to charge all of the plurality of devices, update the one or more charging parameters for a respective device, and transmit to the plurality of devices the one or more charging parameters.

## Description

### TECHNOLOGICAL FIELD

Example embodiments of the present disclosure relate generally to a charging system, and more particularly, to a charging management system and a method thereof.

### BACKGROUND

In multi-device environment systems such as smart homes, industrial settings, and charging docks, managing simultaneous charging of clustered devices presents significant operational challenges. Such systems must dynamically allocate power based on real-time demand while maintaining operational safety and efficiency. However, conventional charging systems often lack intelligent management features, leading to several performance bottlenecks. Charging loads are typically distributed unevenly across ports, resulting in inefficient utilization of available power and extended charging times for high-demand devices. Typically, the charging systems fail to incorporate device-level prioritization, treating all connected units equally regardless of their operational urgency or battery status. The lack of prioritization generally delays readiness of mission-critical devices. Also, the conventional charging systems adequately account for the current ratings of individual devices in relation to the maximum capacity of the charging system, increasing the risk of overcurrent conditions, thermal stress, and reduced system lifespan.

The inventors identified numerous deficiencies and problems in existing technologies and processes, which are the subjects of embodiments described herein. Through applied effort, ingenuity, and innovation, many of these deficiencies and problems have been solved by developing solutions that are included in embodiments of the present disclosure, many examples of which are described in detail herein.

### BRIEF SUMMARY

The following presents a summary of some example embodiments to provide a basic understanding of some aspects of the present disclosure. This summary is not an extensive overview and is intended to neither identify key or critical elements nor delineate the scope of such elements. It will also be appreciated that the scope of the disclosure encompasses many potential embodiments in addition to those here summarized, some of which will be further described in the detailed description that is presented later.

In an example embodiment, a system is disclosed. The system comprises a charging dock having a plurality of charging slots. Further, each charging slot of the plurality of charging slots is configured to be connected to at least one device of a plurality of devices. Further, each of the plurality of devices has one or more charging parameters. Further, a server communicatively coupled to the charging dock. Further, the server comprises a memory having one or more computer readable instructions. Further, at least one processor communicatively coupled with the memory. Further, the at least one processor executing the one or more computer readable instructions stored in the memory is configured to receive one or more device parameters associated with each of the plurality of devices, determine, based at least on the one or more device parameters, a charging dock maximum simultaneous load. Further, the charging dock maximum simultaneous load is a count of the plurality of devices connected to the charging dock and a maximum charging power for each of the plurality of devices, determine whether the charging dock maximum simultaneous load exceeds a maximum output power of the charging dock, determine, when the charging dock maximum simultaneous load exceeds the maximum output power of the charging dock, one or more adjustments to the one or more charging parameters for one or more of the plurality of devices. Further, the one or more adjustments minimize an overall charge time to charge all of the plurality of devices, update, based at least on the one or more adjustments, the one or more charging parameters for a respective device associated with each of the one or more adjustments, and transmit to one or more of the plurality of devices the one or more charging parameters associated with a respective device.

In some embodiments, the one or more device parameters comprises a current battery level, a charging status, and a charging slot number for each of the plurality of devices.

In some embodiments, the one or more charging parameters comprise a charging power for each of the plurality of devices and a minimum charging time to charge each of the plurality of devices from a current battery level to a cut-off battery level. In some embodiments, the at least one processor executing the one or more computer readable instructions stored in the memory is further configured to adjust the charging power of each of the plurality of devices as the maximum charging power for each of the plurality of devices on determining the charging dock maximum simultaneous load is less than the maximum output power of the charging dock.

In some embodiments, the at least one processor executing the one or more computer readable instructions stored in the memory is further configured to update the one or more charging parameters to stop charging of the plurality of devices or set a limited charging power on determining the current battery level is higher than the cut-off battery level. In some embodiments, the at least one processor executing the one or more computer readable instructions stored in the memory is further configured to receive the cut-off battery level or a prioritization scheme for each of the plurality of devices from at least one user. In some embodiments, the at least one processor executing the one or more computer readable instructions stored in the memory is further configured to determine a priority parameter for charging each of the plurality of devices based on the prioritization scheme. Further, to update the one or more charging parameters for a respective device associated with each of the one or more adjustments is further based on the priority parameter for charging each of the plurality of devices.

In some embodiments, one or more power adapters operationally coupled to the charging dock to supply power to the charging dock.

In some embodiments, to update the one or more charging parameters is such that a total charging power for the plurality of devices is less than the maximum output power of the charging dock.

In some embodiments, to transmit the one or more charging parameters includes a push of the one or more charging parameters from the server to one or more of the plurality of devices.

In another example embodiment, a method is disclosed. The method comprises steps of receiving, via at least one processor communicatively coupled with a memory of a server that is communicatively coupled to a charging dock having a plurality of charging slots one or more device parameters associated with each of a plurality of devices, wherein each charging slot of the plurality of charging slots is configured to be connected to at least one device of a plurality of devices, wherein each of the plurality of devices has one or more charging parameters; determining, via the at least one processor, based at least on the one or more device parameters, a charging dock maximum simultaneous load. Further, the charging dock maximum simultaneous load is a count of the plurality of devices connected to the charging dock and a maximum charging power for each of the plurality of devices; determining, via the at least one processor, whether the charging dock maximum simultaneous load exceeds a maximum output power of the charging dock; determining, via the at least one processor, when the charging dock maximum simultaneous load exceeds the maximum output power of the charging dock, one or more adjustments to the one or more charging parameters for one or more of the plurality of devices. Further, the one or more adjustments minimize an overall charge time to charge all of the plurality of devices; updating, via the at least one processor, based at least on the one or more adjustments, the one or more charging parameters for a respective device associated with each of the one or more adjustments; and transmitting, via the at least one processor, to one or more of the plurality of devices the one or more charging parameters associated with a respective device.

The above summary is provided merely for purposes of summarizing some exemplary embodiments to provide a basic understanding of some aspects of the disclosure. Accordingly, it will be appreciated that the above-described embodiments are merely examples and should not be construed to narrow the scope or spirit of the disclosure in any way. It will be appreciated that the scope of the disclosure encompasses many potential embodiments in addition to those here summarized, some of which are further explained within the following detailed description and its accompanying drawings.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 illustrates a network diagram of a system in accordance with an example embodiment of the present disclosure;
FIG. 2 illustrates a block diagram of a server of the system in accordance with an example embodiment of the present disclosure;
FIG. 3 illustrates an isometric view of a charging dock connected with a plurality of devices in accordance with an example embodiment of the present disclosure;
FIG. 4 illustrates an isometric view of a charging dock in accordance with another example embodiment of the present disclosure;
FIG. 5 illustrate a use case of the system in accordance with an example embodiment of the present disclosure;
FIG. 6 illustrates a flowchart showing operations of the system in accordance with an example embodiment of the present disclosure; and
FIG. 7 illustrates a flowchart showing a method in accordance with an example embodiment of the present disclosure.

### DETAILED DESCRIPTION

Some embodiments will now be described more fully hereinafter with reference to the accompanying drawings, in which some, but not all, embodiments of the present disclosure are shown. Indeed, various embodiments may be embodied in many different forms and should not be construed as limited to the embodiments set forth herein; rather, these embodiments are provided so that this disclosure will satisfy applicable legal requirements.

The components illustrated in the figures represent components that may or may not be present in various embodiments of the present disclosure described herein such that embodiments may include fewer or more components than those shown in the figures while not departing from the scope of the present disclosure. Some components may be omitted from one or more figures or shown in dashed line for visibility of the underlying components.

As used herein, the term "comprising" means including but not limited to and should be interpreted in the manner it is typically used in the patent context. Use of broader terms such as comprises, includes, and having should be understood to provide support for narrower terms such as consisting of, consisting essentially of, and comprised substantially of.

The phrases "in various embodiments," "in one embodiment," "according to one embodiment," "in some embodiments," and the like generally mean that the particular feature, structure, or characteristic following the phrase may be included in at least one embodiment of the present disclosure and may be included in more than one embodiment of the present disclosure (importantly, such phrases do not necessarily refer to the same embodiment).

The word "example" or "exemplary" is used herein to mean "serving as an example, instance, or illustration." Any implementation described herein as "exemplary" is not necessarily to be construed as preferred or advantageous over other implementations.

If the specification states a component or feature "may," "can," "could," "should," "would," "preferably," "possibly," "typically," "optionally," "for example," "often," or "might" (or other such language) be included or have a characteristic, that a specific component or feature is not required to be included or to have the characteristic. Such a component or feature may be optionally included in some embodiments or it may be excluded.

The present disclosure provides various embodiments of a system. Embodiments of the present disclosure may comprise a charging dock having a plurality of charging slots. Each charging slot of the plurality of charging slots may configured to be connected to at least one device of a plurality of devices. Each of the plurality of devices may have one or more charging parameters. Embodiments of the present disclosure may comprise a server communicatively coupled to the charging dock. The server may comprise a memory having one or more computer readable instructions. Embodiments of the present disclosure may comprise at least one processor communicatively coupled with the memory. The at least one processor executing the one or more computer readable instructions stored in the memory may be configured to receive one or more device parameters associated with each of the plurality of devices, determine, based at least on the one or more device parameters, a charging dock maximum simultaneous load. The charging dock maximum simultaneous load may be a count of the plurality of devices connected to the charging dock and a maximum charging power for each of the plurality of devices, determine whether the charging dock maximum simultaneous load exceeds a maximum output power of the charging dock, determine, when the charging dock maximum simultaneous load exceeds the maximum output power of the charging dock, one or more adjustments to the one or more charging parameters for one or more of the plurality of devices. The one or more adjustments may minimize an overall charge time to charge all of the plurality of devices, update, based at least on the one or more adjustments, the one or more charging parameters for a respective device associated with each of the one or more adjustments, and transmit to one or more of the plurality of devices the one or more charging parameters associated with a respective device.

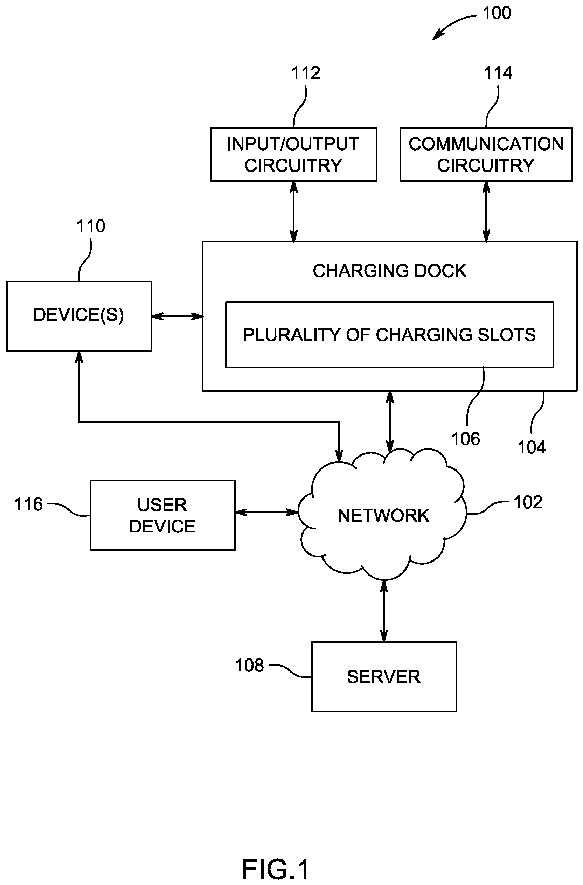

FIG. 1 illustrates a network diagram of a system 100, in accordance with an example embodiment of the present disclosure.

In some embodiments, the system 100 may comprise a network 102, a charging dock 104 having a plurality of charging slots 106, and a server 108 may be communicatively coupled with the charging dock 104. In some embodiments, the network 102 may be a communication network, such as the internet or a cloud network, configured to enable communication between various computing devices and processing systems through wired, wireless, or hybrid connections. Further, the network 102 may also correspond to a distributed infrastructure designed for the exchange of data, information, and resources among interconnected computing devices and systems. The network 102 may facilitate communication and collaboration across remote locations, devices, and platforms. Those skilled in the art will understand that wired networks may include, but are not limited to, wired networks such as wide area networks (WANs) or local area networks (LANs). Further, wireless networks, on the other hand, may use wireless communications via radio frequency (RF) signals or infrared signals. Furthermore, various devices within the system 100 may connect to the network 102 using an array of wired and wireless communication protocols, such as Transmission Control Protocol/Internet Protocol (TCP/IP), User Datagram Protocol (UDP), and 2G, 3G, or 4G communication protocols.

In some embodiments, the charging dock 104 may be configured to receive and electrically interface with a plurality of devices 110. It may be noted that the plurality of devices 110 may also be referred as device(s). In some embodiments, the charging dock 104 may be configured to charge the plurality of devices 110. In some embodiments, the charging dock 104 may be configured to support the plurality of devices 110 in a docked orientation. In some embodiments, the charging dock 104 may comprise the plurality of charging slots 106. Further, each charging slot of the plurality of charging slots 106 may be configured to be connected to at least one device of the plurality of devices 110. In some embodiments, the plurality of charging slots 106 may be configured to provide an optimal charging contact and data communication alignment between the plurality of devices 110 and the plurality of charging slots 106. In some embodiments, the plurality of devices 110 may correspond to a plurality of handheld mobile terminals. In some embodiments, the plurality of devices 110 may be configured to perform one or more operations, such as inventory management, field operations, delivery tracking, and point-of-sale activities. In some embodiments, the plurality of devices 110 may comprise communications modules, integrated sensors, barcode scanners, and other modules. In some embodiments, each of the plurality of devices 110 may have one or more charging parameters.

In some embodiments, the charging dock 104 may comprise a plurality of power delivery circuits (not shown). In some embodiments, each charging slot of the plurality of charging slots 106 may be operationally coupled with at least one power delivery circuit of the plurality of power delivery circuits. In some embodiments, the plurality of power delivery circuits may be configured to deliver a regulated power (e.g., direct current (DC) power) to the plurality of devices 110 while being plugged into the plurality of charging slots 106. In some embodiments, the charging dock 104 may be electrically coupled with a power source (not shown). In some embodiments, the plurality of power delivery circuits may be configured to draw power from the power source.

In some embodiments, the charging dock 104 may be configured to uniquely identify each device of the plurality of devices 110 through electrical handshake between the charging dock 104 and the plurality of devices 110. In some embodiments, upon docking of each device of the plurality of devices 110 into the charging dock 104, each device of the plurality of devices 110 may be configured to report one or more device parameters to the charging dock 104. In some embodiments, the one or more device parameters may comprise a current battery level, a charging status, and a charging slot number for each of the plurality of devices 110.

In some embodiments, the system 100 may further comprise the server 108. In some embodiments, the server 108 may be communicatively coupled with the charging dock 104. In some embodiments, the server 108 may correspond to a computer or software module that is configured to provide centralized resources, data, or services to the charging dock 104. The server 108 may be configured to handle and manage one or more computational tasks and data processing within the system 100. In some embodiments, the server 108 may include storage systems, such as hard drives or storage arrays, to store and manage large volumes of data and information accessible to network users. In some embodiments, the server 108 may further provide centralized control and management capabilities, allowing network administrators to configure, monitor, and maintain network resources, security settings, and user access permissions from a single location. In some embodiments, the server 108 may comprise a memory and at least one processor.

In some embodiments, the server 108 may be configured to receive the one or more device parameters associated with each of the plurality of devices 110. In some embodiments, the server 108 may be configured to receive the one or more charging parameters through the network 102. In some embodiments, the server 108 may be configured to determine a charging dock maximum simultaneous load, based at least on the one or more device parameters. Further, the charging dock maximum simultaneous load may be a count of the plurality of devices 110 connected to the charging dock 104 and a maximum charging power for each of the plurality of devices 110. In some embodiments, the server 108 may be configured to compare the charging dock maximum simultaneous load with a maximum output power of the charging dock 104.

In some embodiments, the server 108 may be configured to determine whether the charging dock maximum simultaneous load exceeds the maximum output power of the charging dock 104. In one embodiment, when the charging dock maximum simultaneous load exceeds a maximum output power of the charging dock 104, the server 108 may be configured to determine one or more adjustments to the one or more charging parameters for one or more of the plurality of devices 110. Further, the one or more adjustments may minimize an overall charge time to charge all of the plurality of devices 110. In some embodiments, the one or more charging parameters may comprise, among other things, a charging power for each of the plurality of devices 110 and a minimum charging time to charge each of the plurality of devices 110 from a current battery level to a cut-off battery level. It may be noted that the phrase "all of the plurality of devices 110" may, in some embodiments, refer to a subset of the plurality of devices 110 connected to the charging dock 104. Accordingly, the one or more adjustments may be applied to one or more selected devices rather than to each of the plurality of devices 110.

In some other embodiments, the one or more charging parameters may comprise a battery health status (i.e., charging life cycle) of each of the plurality of devices 110, maximum charging power for each of the plurality of devices 110, battery charging profile, and quick charging protocol version supported by each of the plurality of devices 110. In some embodiments, the battery health status indicates the current condition or degradation level of a device's battery based on how many charge cycles it has undergone. Further, the maximum charging power is the highest amount of electrical power (typically in watts) that each of the plurality of devices 110 may safely accept for charging. Further, battery charging profile is a predefined set of charging behaviors or power levels over time that each of the plurality of devices 110 follow to optimize battery life and performance. Further, the quick charging protocol version is the specific version of a fast-charging standard.

In some embodiments, the server 108 may be configured to update the one or more charging parameters for a respective device associated with each of the one or more adjustments, based at least on the one or more adjustments. Further, to update the one or more charging parameters is such that a total charging power for the plurality of devices 110 may be less than the maximum output power of the charging dock 104. In some embodiments, the total charging power may correspond to a cumulative charging power required to charge each device of the plurality of devices 110. In some embodiments, the total charging power may be calculated at a predefined instant of time (e.g. at the instant time of charging). In some embodiments, the server 108 may be configured to transmit the one or more charging parameters associated with a respective device to one or more of the plurality of devices 110. In some embodiments, to transmit the one or more charging parameters may include a push of the one or more charging parameters from the server 108 to one or more of the plurality of devices 110.

In some embodiments, the server 108 may be configured to determine the current battery level is higher than the cut-off battery level. In some embodiments, the server 108 may be configured to update the one or more charging parameters to stop charging of the plurality of devices 110 on determining the current battery level is higher than the cut-off battery level. In some embodiments, the server 108 may be configured to update the one or more charging parameters to set a limited charging power on determining the current battery level is higher than the cut-off battery level. In some embodiments, the server 108 may be configured to receive the cut-off battery level for each of the plurality of devices 110 from at least one user. In some embodiments, the server 108 may be configured to receive a prioritization scheme for each of the plurality of devices 110 from the at least one user. In some embodiments, the server 108 may be configured to determine a priority parameter for charging each of the plurality of devices 110 based on the prioritization scheme. Further, to update the one or more charging parameters for a respective device associated with each of the one or more adjustments may further based on the priority parameter for charging each of the plurality of devices 110.

In some embodiments, the server 108 may be configured to determine whether the charging dock maximum simultaneous load is less than the maximum output power of the charging dock 104. In another embodiment, the server 108 may be configured to adjust the charging power of each of the plurality of devices 110 as the maximum charging power for each of the plurality of devices 110, upon determining the charging dock maximum simultaneous load is less than the maximum output power of the charging dock 104.

In some embodiments, the system 100 may further comprise an input/output circuitry 112 and a communication circuitry 114. The input/output circuitry 112 may enable the at least one user to communicate or interface with the charging dock 104, via a user device 116. The user device 116 may include N number of user devices. In some embodiments, the input/output circuitry 112 may act as a medium to transmit input from the user device 116 to and from the charging dock 104. In some embodiments, the input/output circuitry 112 may refer to the hardware and software components that facilitate the exchange of information between the user device 116 and the charging dock 104. In one example, the input/output circuitry 112 may include a user interface as input circuitry that facilitates providing the cut-off battery level or the prioritization scheme for each of the plurality of devices 110 from the at least one user. The input/output circuitry 112 may include various output devices such as the user device 116, printers for the at least one user to receive data. In one example embodiment, the input/output circuitry 112 may comprise the plurality of charging slots 106. Further, the plurality of charging slots 106 of the charging dock 104 may be configured to receive the one or more device parameters from the plurality of device therefore the plurality of charging slots 106 may be referred as the input circuitry. Further, the plurality of charging slots 106 may be configured to provide the charging power to the plurality of devices 110 therefore the plurality of charging slots 106 may be referred as the output circuitry.

In some embodiments, the system 100 may further comprise the communication circuitry 114. The communication circuitry 114 may allow the charging dock 104 to exchange data or information with the user device 116, other systems or apparatuses. Further, the communication circuitry 114 may include network interfaces, protocols, and software modules responsible for sending and receiving data or information from the user device 116. In some embodiments, the communication circuitry 114 may include Ethernet ports, Wi-Fi adapters, or communication protocols like HTTP or MQTT for connecting with other systems. The communication circuitry 114 may further include components such as communication modules (e.g., Wi-Fi, Ethernet, cellular), transceivers, antennas, and protocols (e.g., TCP/IP, MQTT, SNMP) for exchanging data with the user device 116 and the other systems.

It will be apparent to one skilled in the art the above-mentioned components of the system 100 have been provided only for illustration purposes, without departing from the scope of the disclosure.

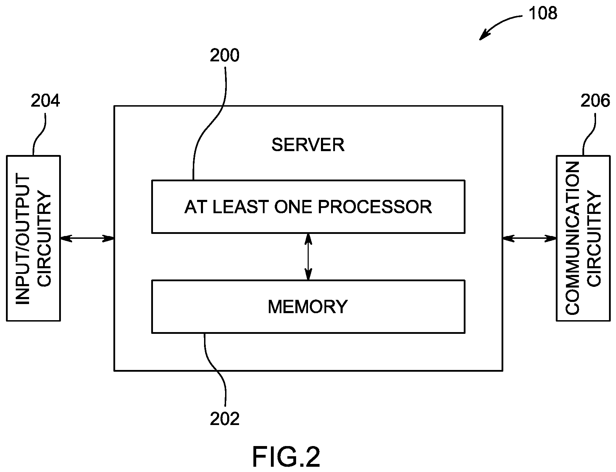

FIG. 2 illustrates a block diagram of the server 108 of the system 100, in accordance with an example embodiment of the present disclosure.

In some embodiments, the server 108 may comprise at least one processor 200, a memory 202, an input/output circuitry 204, and a communication circuitry 206. In some embodiments, the at least one processor 200 may include suitable logic, circuitry, and/or interfaces that are operable to execute one or more computer readable instructions stored in the memory 202 to perform predetermined operations. In one embodiment, the at least one processor 200 may be configured to decode the one or more instructions and execute the one or more instructions that are stored within the memory 202. The at least one processor 200 may be configured to execute the one or more computer readable instructions, such as program instructions to carry out any of the functions described in this description. Further, the at least one processor 200 may be implemented using one or more processor technologies known in the art such as central processing unit (CPU), field-programmable gate array (FPGA), digital signal processors (DSP), etc. Examples of the at least one processor 200 may comprise at least one of one or more general purpose processors and/or one or more special purpose processors that may be designed to handle the server 108.

In some embodiments, the at least one processor 200 may be configured to receive the one or more device parameters associated with each of the plurality of devices 110. In some embodiments, the at least one processor 200 may be configured to extract, decode, and validate the one or more device parameters through the network 102. In some embodiments, the one or more device parameters may comprise the current battery level, the charging status, and the charging slot number for each of the plurality of devices 110. In one example embodiment, the one or more device parameters may further comprise a real-time power consumption profile and a device thermal status. In some embodiments, the at least one processor 200 may be configured to determine the charging dock maximum simultaneous load, based at least on the one or more device parameters. Further, the charging dock maximum simultaneous load may be the count of the plurality of devices 110 connected to the charging dock 104 (i.e., actively charging) and the maximum charging power for each of the plurality of devices 110. In some embodiments, the maximum charging power may be defined by current voltage, amperage, and battery status associated with each device of the plurality of devices 110.

In some embodiments, the at least one processor 200 may be configured to compare the charging dock maximum simultaneous load with the maximum output power of the charging dock 104. In some embodiments, the at least one processor 200 may be configured to compare the charging dock maximum simultaneous load with the maximum output power of the charging dock 104 to ensure compliance with operational thresholds of the charging dock 104. In some embodiments, the at least one processor 200 may be configured to determine whether the charging dock maximum simultaneous load exceeds the maximum output power of the charging dock 104. In one embodiment, the at least one processor 200 may be configured to compute the one or more adjustments to the one or more charging parameters for one or more of the plurality of devices 110, upon determining the charging dock maximum simultaneous load exceeds the maximum output power of the charging dock 104. Further, the one or more adjustments of the one or more charging parameters may comprise at least power reallocation strategies, time-based charging strategies, or device prioritization. Further, the one or more adjustments may minimize the overall charge time to charge all of the plurality of devices 110, by balancing individual charging durations with power availability.

In some embodiments, the one or more charging parameters may comprise the charging power for each of the plurality of devices 110 and the minimum charging time to charge each of the plurality of devices 110 from the current battery level to the cut-off battery level. In some embodiments, the at least one processor 200 may be configured to update the one or more charging parameters for each respective device, based at least on the one or more adjustments. Further, the updated one or more charging parameters may be configured such that the total charging power for the plurality of devices 110 may be less than the maximum output power of the charging dock 104. In some embodiments, the at least one processor 200 may be configured to transmit the one or more charging parameters associated with the respective device of the plurality of devices 110. In some embodiments, to transmit the one or more charging parameters may include a push of the updated one or more charging parameters from the at least one processor 200 of the server 108 to the one or more of the plurality of devices 110 through the network 102.

In some embodiments, the at least one processor 200 may be configured to determine the current battery level is higher than the cut-off battery level. In some embodiments, the at least one processor 200 may be configured to update the one or more charging parameters to stop charging of the plurality of devices 110 on determining the current battery level is higher than the cut-off battery level. In some embodiments, the at least one processor 200 may be configured to update the one or more charging parameters to set the limited charging power on determining the current battery level is higher than the cut-off battery level.

In some embodiments, the at least one processor 200 may be configured to receive the cut-off battery level or the prioritization scheme for each of the plurality of devices 110 from the at least one user. In some embodiments, the at least one processor 200 may be configured to determine the priority parameter for charging each of the plurality of devices 110 based on the prioritization scheme. Further, to update the one or more charging parameters for the respective device associated with each of the one or more adjustments may further based on the priority parameter for charging each of the plurality of devices 110.

In some embodiments, the at least one processor 200 may be configured to determine whether the charging dock maximum simultaneous load is less than the maximum output power of the charging dock 104. In another embodiment, the at least one processor 200 may be configured to adjust the charging power of each of the plurality of devices 110 as the maximum charging power for each of the plurality of devices 110, upon determining the charging dock maximum simultaneous load is less than the maximum output power of the charging dock 104. In one example embodiment, the at least one processor 200 may be further configured to enable fast-charging modes, synchronize parallel charging operations across all active charging slots 106, and maximize throughput efficiency of the charging dock 104 while remaining within power supply safety margins.

In some embodiments, the memory 202 may be configured to store the one or more computer readable instructions and data executed by the at least one processor 200. Further, the memory 202 may include the one or more computer readable instructions that are executable by the at least one processor 200 to perform specific operations. The memory 202 may be configured to include the instructions to receive the one or more device parameters associated with each of the plurality of devices 110. Further, the memory 202 may be configured to include the instructions to determine the charging dock maximum simultaneous load. The memory 202 may be configured to include the instructions to determine whether the charging dock maximum simultaneous load exceeds the maximum output power of the charging dock 104. The memory 202 may be configured to include the instructions to determine the one or more adjustments to the one or more charging parameters for the one or more of the plurality of devices 110. The memory 202 may be configured to include the instructions to update the one or more charging parameters for the respective device associated with each of the one or more adjustments. The memory 202 may be configured to include the instructions to transmit to one or more of the plurality of devices 110 the one or more charging parameters associated with the respective device.

The memory 202 may be configured to store the one or more computer readable instructions. It is apparent to a person with ordinary skill in the art that the one or more computer readable instructions stored in the memory 202 enable the hardware of the system 100 to perform the predetermined operations. Some of the commonly known memory implementations include, but are not limited to, fixed (hard) drives, magnetic tape, floppy diskettes, optical disks, Compact Disc Read-Only Memories (CD-ROMs), and magneto-optical disks, semiconductor memories, such as ROMs, Random Access Memories (RAMs), Programmable Read-Only Memories (PROMs), Erasable PROMs (EPROMs), Electrically Erasable PROMs (EEPROMs), flash memory, magnetic or optical cards, or other type of media/machine-readable medium suitable for storing electronic instructions.

In some embodiments, the server 108 may further comprise the input/output circuitry 204. The input/output circuitry 204 may enable the charging dock 104 to communicate or interface with the server 108, via the network 102. In some embodiments, the input/output circuitry 204 may act as a medium to transmit input from the server 108 to and from the charging dock 104. In some embodiments, the input/output circuitry 204 may refer to the hardware and software components that facilitate the exchange of information between the server 108 and the charging dock 104. In some embodiments, the server 108 may further comprise the communication circuitry 206. The communication circuitry 206 may allow the server 108 to exchange data or information with the charging dock 104, other systems or apparatuses. Further, the communication circuitry 206 may include network interfaces, protocols, and software modules responsible for sending and receiving data or information from the server 108. In some embodiments, the communication circuitry 206 may include Ethernet ports, Wi-Fi adapters, or communication protocols like HTTP or MQTT for connecting with other systems. The communication circuitry 206 may further include components such as communication modules (e.g., Wi-Fi, Ethernet, cellular), transceivers, antennas, and protocols (e.g., TCP/IP, MQTT, SNMP) for exchanging data with the server 108 and the other systems. The communication circuitry 206 may allow the server 108 to stay up-to-date.

It will be apparent to one skilled in the art the above-mentioned components of the server 108 have been provided only for illustration purposes, without departing from the scope of the disclosure.

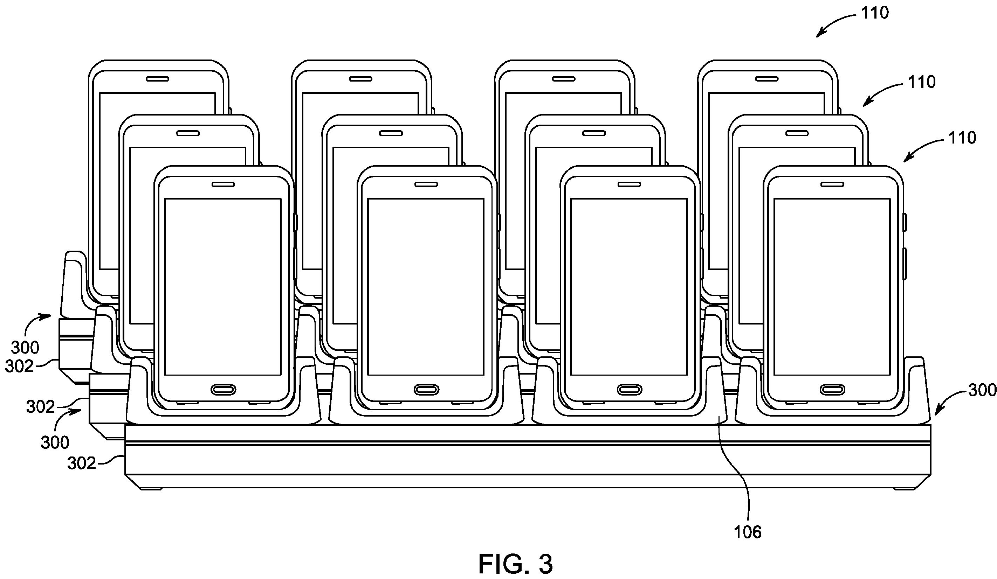

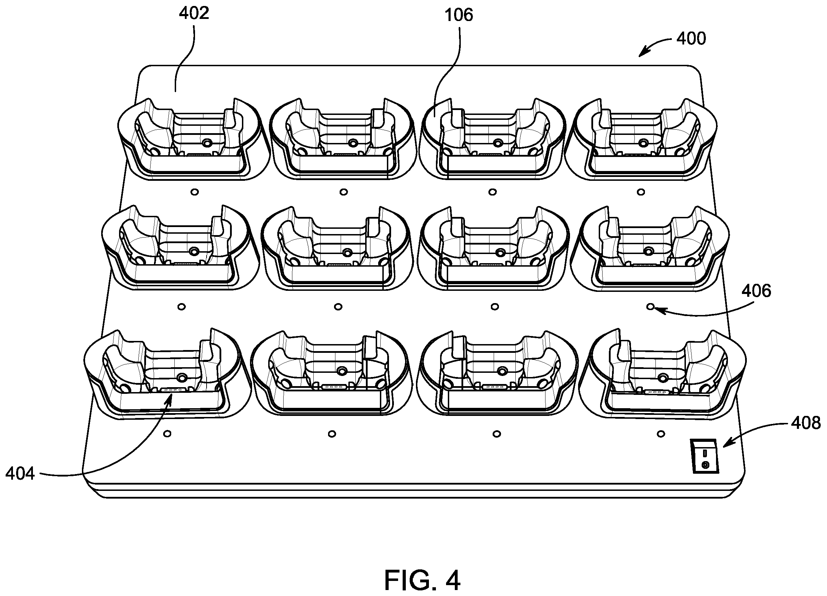

FIG. 3 illustrates an isometric view of a charging dock 300 connected with the plurality of devices 110, in accordance with an example embodiment of the present disclosure. FIG. 4 illustrates an isometric view of a charging dock 400, in accordance with another example embodiment of the present disclosure.

It may be noted that the charging dock 300 and the charging dock 400 are similar to the charging dock 104.

In some embodiments, the system 100 may comprise the charging dock 300 having the plurality of charging slots 106. It may be noted that in one embodiment, the system 100 may comprise one charging dock communicatively coupled with the server 108 via the network 102. It may be noted that in another embodiment, the system 100 may comprise more than one charging dock each communicatively coupled with the server 108 via the network 102, as illustrated in FIG. 3. In some embodiments the charging dock 300 may be referred to as a charging wall. In some embodiments, the charging dock 300 may comprise a base 302 and the plurality of charging slots 106. For example, the base 302 comprises 12 charging slots 106.

In some embodiments, the base 302 of the charging dock 300 may be configured to provide protection to one or more internal components of the charging dock 300. In some embodiments, the base 302 of the charging dock 300 may be constructed with various materials such as, industrial-grade thermoplastic material. In some embodiments, the materials for making the base 302 of the charging dock 300 may be selected such that the base 302 may withstand impact, thermal fluctuations, and prolonged operational cycles. Further, each charging slot of the plurality of charging slots 106 may be configured to be connected to the at least one device of the plurality of devices 110. In some embodiments, the plurality of charging slots 106 of the charging dock 300 may be arranged in at least an offset-row configuration (as illustrated in FIG. 3), a daisy-chain configuration, an array configuration, etc. In some embodiments, the plurality of charging slots 106 may be constructed to accommodate the plurality of devices 110 in a vertically upright position. In some embodiments, the plurality of charging slots 106 may be configured to provide an optimal charging contact and data communication alignment between the plurality of devices 110 and the plurality of charging slots 106.

As illustrated in FIG. 4, the system 100 may comprise the charging dock 400 having the plurality of charging slots 106. It may be noted that in one embodiment, the system 100 may comprise one charging dock communicatively coupled with the server 108 via the network 102, as illustrated in FIG. 4. In some embodiments, the charging dock 400 may comprise a base 402 and the plurality of charging slots 106. For example, the base 402 comprises 10 charging slots 106.

In some embodiments, the base 402 of the charging dock 400 may be configured to provide protection to one or more internal components of the charging dock 400. Further, each charging slot of the plurality of charging slots 106 may be configured to be connected to the at least one device of the plurality of devices 110. In some embodiments, the plurality of charging slots 106 of the charging dock 400 may be arranged in at least a grid configuration (as illustrated in FIG. 4), a daisy-chain configuration, an array configuration, etc. In some embodiments, the plurality of charging slots 106 may be constructed to accommodate the plurality of devices 110 in a vertically upright position. In some embodiments, the plurality of charging slots 106 may be configured to provide an optimal charging contact and data communication alignment between the plurality of devices 110 and the plurality of charging slots 106.

In some embodiments, the charging dock 400 may comprise the plurality of power delivery circuits. In some embodiments, each charging slot of the plurality of charging slots 106 may be operationally coupled with at least one power delivery circuit of the plurality of power delivery circuits. In some embodiments, the plurality of power delivery circuits may be configured to supply power to the plurality of devices 110 while being plugged into the plurality of charging slots 106. In some embodiments, the charging dock 400 may be electrically coupled with a power source (not shown). In some embodiments, the plurality of power delivery circuits may be configured to draw electrical energy from the power source. In some embodiments, the plurality of power delivery circuits may be configured to covert an input alternating current (AC) voltage into an output direct current (DC) voltage.

As illustrated in FIG. 4, each charging slot of the plurality of charging slots 106 may comprise a plurality of connecting terminals 404. In some embodiments, the plurality of connecting terminals 404 may be electrically coupled with the at least one power deliver circuit of the plurality of power delivery circuits. In some embodiments, the plurality of connecting terminals 404 of each charging slot may be configured to deliver the output DC voltage to charge a corresponding device of the plurality of devices 110. In some embodiments, the charging dock 400 may comprise a plurality of status indicators 406. In some embodiments, each status indicator of the plurality of status indicators 406 may be operationally coupled with each charging slot of the plurality of charging slots 106. In some embodiments, the plurality of status indicators 406 may be configured to generate visual indications. In some embodiments, the visual indications generated by the plurality of status indicators 406 may be configured to represent one or more charging states associated with each charging slot of the plurality of power delivery circuits. In some embodiments, the one or more charging states may comprise at least a charging initiated, charging in progress, charging complete, and fault/error conditions.

In some embodiments, the base 402 of the charging dock 400 may comprise at least one switch 408 to turn the charging dock 400 on or off. In some embodiments, the at least one switch 408 may be implemented as a mechanical rocker switch, capacitive touch switch, or an electronic soft power button. In some embodiments, the at least one switch 408 may be coupled to the power deliver circuits to interrupt or establish electrical connection between the charging dock's internal power bus and the power source. In one example embodiment, the at least one switch 408 may include an integrated status LED configured to indicate the operational state of the charging dock 400, such as powered on, standby, or fault condition.

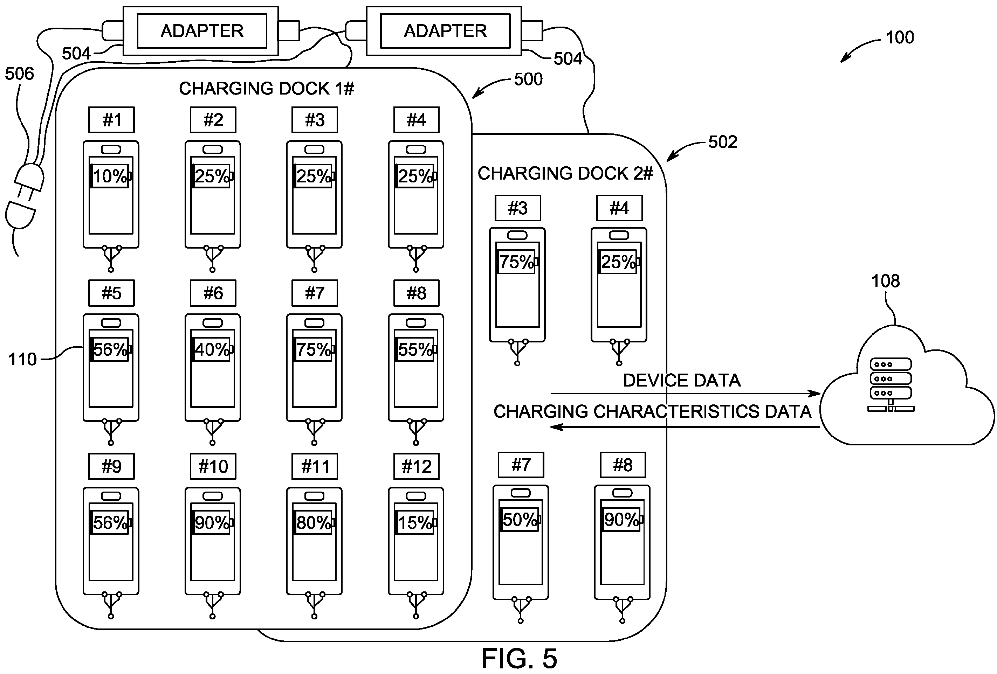

FIG. 5 illustrate a use case of the system 100, in accordance with an example embodiment of the present disclosure.

In some embodiments, the system 100 may comprise a first charging dock 500 and a second charging dock 502. It may be noted that the first charging dock 500 and the second charging dock 502 are similar to the charging dock 104. Further, the first charging dock 500 may comprise the plurality of charging slots 106 (i.e. 12 charging slots 106). In some embodiments, each charging slot of the plurality of charging slots 106 may be configured to be connected to at least one device of the plurality of devices 110 (i.e. device #1 to device #12). Further, each device of the plurality of devices 110 may have one or more charging parameters. Further, the one or more charging parameters the one or more charging parameters comprise a charging power for each of the plurality of devices 110 and a minimum charging time to charge each of the plurality of devices 110 from a current battery level to a cut-off battery level.

In some embodiments, the current battery level of each device of the plurality of devices 110 may be defined such that the device #1 has 10% current battery level, the device #2 has 25% current battery level, the device #3 has 25% current battery level, the device #4 has 25% current battery level, the device #5 has 50% current battery level, the device #6 has 40% current battery level, the device #7 has 76% current battery level, the device #8 has 55% current battery level, the device #9 has 56% current battery level, the device #10 has 90% current battery level, the device #11 has 80% current battery level, and the device #12 has 15% current battery level.

Further, the second charging dock 502 may comprise an another plurality of charging slots (not shown) (i.e. 8 charging slots 106). In some embodiments, each charging slot of the another plurality of charging slots may be configured to be connected to at least one device of a plurality of devices 110 (i.e. device #1 to device #8). Further, each device of the plurality of devices 110 may have the one or more charging parameters. Further, the one or more charging parameters comprise a charging power for each of the plurality of devices 110 and a minimum charging time to charge each of the plurality of devices 110 from a current battery level to a cut-off battery level. In one example embodiment, the current battery level of each device of the plurality of devices 110 may be defined such that the device #1 has 10% current battery level, the device #2 has 24% current battery level, the device #3 has 75% current battery level, the device #4 has 25% current battery level, the device #5 has 67% current battery level, the device #6 has 34% current battery level, the device #7 has 50% current battery level, and the device #8 has 90% current battery level.

In some embodiments, upon connecting with the first charging dock 500 and the second charging dock 502, each device of the plurality of devices 110 may be configured to report the one or more device parameters and the one or more charging parameters to the first charging dock 500 and the second charging dock 502. In some embodiments, upon connecting with the plurality of devices 110, the first charging dock 500 and the second charging dock 502 may be configured to set the charging power for the plurality of devices 110 as a minimum charging power. In some embodiments, the first charging dock 500 and the second charging dock 502 may be configured to transmit a device data (i.e. the one or more device parameters and the one or more charging parameters) to the server 108 via the network 102.

In some embodiments, the system 100 may further comprise the server 108. In some embodiments, the server 108 may be communicatively coupled with the first charging dock 500 and the second charging dock 502. In some embodiments, the server 108 may comprise the memory 202 and the at least one processor 200. In some embodiments, the server 108 may be configured to receive the one or more device parameters along with the one or more charging parameters associated with each of the plurality of devices 110 connected with the first charging dock 500. In some embodiments, the server 108 may be configured to determine a charging dock maximum simultaneous load (i.e. 120W) for the first charging dock 500, based at least on the one or more device parameters. Further, the charging dock maximum simultaneous load may be a count of the plurality of devices 110 (i.e. 12 devices) connected to the charging dock 104 and a maximum charging power for each of the plurality of devices 110 (i.e. 10W (5V*2A)). In some embodiments, the server 108 may be configured to compare the charging dock maximum simultaneous load with a maximum output power of the charging dock 104 (i.e. 100 W).

In some embodiments, the server 108 may be configured to determine whether the charging dock maximum simultaneous load exceeds the maximum output power of the charging dock 104 (i.e. 120W > 100W). In one embodiment, when the charging dock maximum simultaneous load exceeds the maximum output power of the charging dock 104, the server 108 may be configured to determine one or more adjustments to the one or more charging parameters for one or more of the plurality of devices 110.

In one example embodiment, the one or more adjustments to the one or more charging parameters for one or more of the plurality of devices 110 may define that 6 devices of the plurality of devices 110 (i.e. device #1, device #2, device #3, device #4, device #6, and device #12) having the current battery level less than 50% may be provided a maximum charging power (i.e. 10 W) thereby utilizing 60W of the maximum output power of the first charging dock 500. Further, the 4 devices of the plurality of devices 110 (i.e. device #5, device #7, device #8, and device #9) having the current battery level not lower may be provided a maximum charging power of 5 V * 1 A or higher but limited to 40W the maximum output power of the first charging dock 500. Further, the 2 devices of the plurality of devices 110 (i.e. device #10 and device #11) having the current battery level higher may not be provided a charging power instead the 2 devices may get charged when there may be less devices connected to the first charging dock 500.

In some embodiments, the server 108 may be configured to update the one or more charging parameters for the respective devices associated with each of the one or more adjustments, based at least on the one or more adjustments. In some embodiments, the server 108 may be configured to transmit the one or more charging parameters associated with the respective device to one or more of the plurality of devices 110. Further, the first charging dock 500 and the second charging dock 502 may be configured to receive the one or more charging parameters.

In some embodiments, the server 108 may be configured to determine the current battery level is higher than the cut-off battery level (e.g., 90% battery level). In some embodiments, the server 108 may be configured to receive the cut-off battery level for each of the plurality of devices 110 from at least one user. In some embodiments, the server 108 may be configured to update the one or more charging parameters to stop charging of the plurality of devices 110 on determining the current battery level is higher than the cut-off battery level. In some embodiments, the server 108 may be configured to update the one or more charging parameters to set a limited charging power on determining the current battery level is higher than the cut-off battery level.

In some embodiments, the server 108 may be configured to determine whether the charging dock maximum simultaneous load is less than the maximum output power of the charging dock 104. In another embodiment, the server 108 may be configured to adjust the charging power of each of the plurality of devices 110 as the maximum charging power for each of the plurality of devices 110, upon determining the charging dock maximum simultaneous load is less than the maximum output power of the charging dock 104. In some embodiments, the server 108 may be configured to update the one or more charging parameters for the respective devices associated with each of the one or more adjustments, based at least on the one or more adjustments.

It may be noted that the first charging dock 500 and the second charging dock 502 are similar to the charging dock 104 and are referred as the charging dock 104 in the following description.

As illustrated in FIG. 5, the system 100 may further comprise one or more adapters 504. Further, the one or more adapters 504 may be operationally coupled to the charging dock 104. In some embodiments, the one or more adapters 504 may be configured to supply power to the charging dock 104. In some embodiments, the one or more adapters 504 may be electrically coupled with the power source via at least one plug 506. Further, the one or more adapters 504 may be configured to receive the power supply (i.e.220V-240V alternating current (AC)). Further, the one or more adapters 504 may be configured to transduce the AC power supply into a direct current (DC) power supply (e.g., 5V-24V DC). In some embodiments, the one or more adapters 504 may be configured to supply the DC power supply to the charging dock 104 for charging the plurality of devices 110.

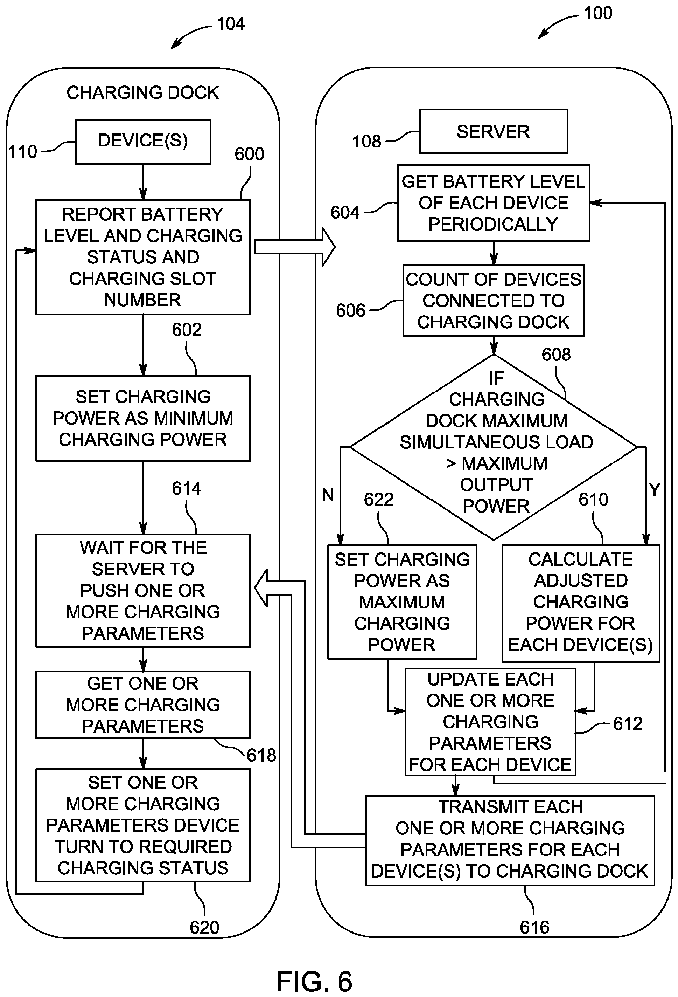

FIG. 6 illustrates a flowchart showing operations of the system 100 in accordance with an example embodiment of the present disclosure.

At operation 600, each device 110 reports battery level (i.e. the current battery level of each device 110), the charging status and the charging slot number. In some embodiments, the battery level, the charging status, and the charging slot number corresponds to the one or more device parameters. In some embodiments, each device of the plurality of devices 110 may report the one or more device parameters to the charging dock 104, such as on docking of each device of the plurality of devices 110 into the charging dock 104.

At operation 602, the charging dock 104 sets the charging power for each the plurality of devices 110 as the minimum charging power. In some embodiments, the charging dock 104 may set the charging power as the minimum charging power, upon docking the plurality of devices 110 into the charging dock 104. Further, the charging dock 104 may transmit a device data (i.e. the one or more device parameters and the one or more charging parameters) to the server 108 via the network 102.

At operation 604, the server 108 gets the battery level of each device of the plurality of devices 110 periodically. In some embodiments, the server 108 may be communicatively coupled with the charging dock 104. In some embodiments, the server 108 may comprise the at least one processor 200. In some embodiments, the at least one processor 200 of the server 108 may be configured to extract, decode, and validate the one or more device parameters through the network 102.

In some embodiments, when the plurality of devices 110 are placed on the charging dock 104, each of the plurality of devices 110 are configured to autonomously determine their current status, such as battery level or operational state, and to acquire a charging slot identifier through communication with the charging dock 104. The plurality of devices 110 then transmit this status information to the server 108. Additionally, upon removal from the charging dock 104, the plurality of devices 110 are further configured to update and transmit their current status to the server 108, thereby maintaining real-time device state awareness.

At operation 606, the server 108 determines a count of the plurality of devices 110 connected to the charging dock 104. Further, the server 108 may determine the charging dock maximum simultaneous load for the charging dock 104. In some embodiments, the charging dock maximum simultaneous load may be a count of the plurality of devices 110 connected to the charging dock 104 and a maximum charging power for each of the plurality of devices 110.

At operation 608, the server 108 determines if the charging dock maximum simultaneous load exceeds the maximum output power of the charging dock 104. If the maximum output power of the charging dock 104 is not exceed, the server 108 sets the charging power as the maximum charging power for each of the plurality of devices 110. If the maximum output power of the charging docket 104 is exceeded, the server 108 calculates an adjusted charging power for each device of the plurality of devices 110.

At operation 610, the server 108 calculates the adjusted charging power for each device of the plurality of devices 110. In some embodiments, the server 108 calculates the adjusted changing power when the charging dock maximum simultaneous load exceeds the maximum output power of the charging dock 104. Further, the adjusted charging power may comprise the one or more adjustments to the one or more charging parameters for the one or more of the plurality of devices 110. Further, the one or more adjustments may minimize an overall charge time to charge all of the plurality of devices 110. In some embodiments, the one or more charging parameters may comprise the charging power for each of the plurality of devices 110 and the minimum charging time to charge each of the plurality of devices 110 from the current battery level to the cut-off battery level.

At operation 612, the server 108 updates each of the one or more charging parameters for each device of the plurality of devices 110. In some embodiments, the server 108 may update each charging parameter, based at least on the one or more adjustments.

At operation 614, the charging dock 104 waits for the server 108 to push the one or more charging parameters associated with the respective device. In some embodiments, the server 108 may be communicatively coupled with the server 108 through the network 102.

At operation 616, the server 108 transmits each charging parameter of the one or more charging parameters for each device of the plurality of devices 110 to the charging dock 104. In some embodiments, the server 108 may transmit charging characteristics data (i.e., the one or more charging parameters) to the charging dock 104. Further, to transmit the one or more charging parameters may include a push of the one or more charging parameters from the server 108 to each of the plurality of devices 110. At operation 618, the charging dock 104 receives the one or more charging parameters from the server 108. In some embodiments, the charging dock 104 may receive the one or more charging parameters through the network 102.

At operation 620, the charging dock 104 sets the one or more charging parameters of the plurality of devices 110 to turn each device to a required charging status. In some embodiments, the required charging status may be calculated by the charging dock 104. Further, the required charging status may correspond to one of the one or more charging parameters associated with each device of the plurality of devices 110. In one example embodiments, the required charging status may be received by the server 108 from the at least one user as the cut-off battery. In some embodiments, the server 108 may update the one or more charging parameters to stop charging of the plurality of devices 110 on determining the current battery level is higher than the cut-off battery level. In some embodiments, the server 108 may update the one or more charging parameters to set a limited charging power on determining the current battery level is higher than the cut-off battery level.

Alternatively, to step 610, at operation 622, the server 108 sets the charging power as the maximum charging power for each of the plurality of devices 110. In some embodiments, the server 108 sets the charging power as the maximum charging power upon determining the charging dock maximum simultaneous load is less than the maximum output power of the charging dock 104. Further, the server 108 updates the one or more charging parameters for the respective devices associated with each of the one or more adjustments, based at least on the one or more adjustments.

In another embodiment of the present invention, each or at least one of the plurality of devices 110 may be integrated with or supported with wireless local area network (WLAN) wireless wide area network (WWAN) that enables the plurality of devices 110 to bypass the charging dock 104 and directly communicate with the server 108.

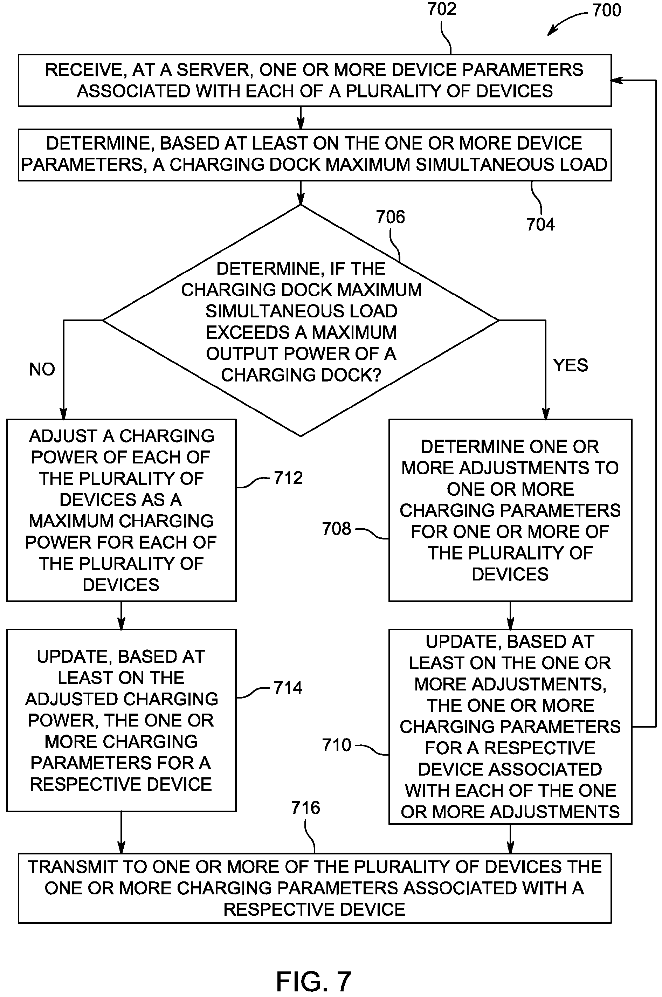

FIG. 7 illustrates a flowchart showing a method 700, in accordance with an example embodiment of the present disclosure.

At operation 702, the server 108 receives the one or more device parameters associated with each of the plurality of devices 110. In some embodiments, the server 108 may comprise the at least one processor 200 and the memory 202. In some embodiments, the at least one processor 200 communicatively coupled with the memory 202 of the server 108 communicatively coupled to the charging dock 104 having the plurality of charging slots 106 may receive the one or more device parameters associated with each of the plurality of devices 110. Further, each of the plurality of devices 110 may have the one or more charging parameters. Further, each charging slot of the plurality of charging slots 106 may be connected to at least one device of the plurality of devices 110. In some embodiments, the one or more device parameters may comprise the current battery level, the charging status, and the charging slot number for each of the plurality of devices 110.

At operation 704, the server 108 determines the charging dock maximum simultaneous load, based at least on the one or more device parameters. In some embodiments, the at least one processor 200 determines the charging dock maximum simultaneous load, based at least on the one or more device parameters. Further, the charging dock maximum simultaneous load may be a count of the plurality of devices 110 connected to the charging dock 104 and the maximum charging power for each of the plurality of devices 110. In some embodiments, the maximum charging power may be defined by current voltage, amperage, and battery status associated with each device of the plurality of devices 110.

At operation 706, the server 108 determines if the charging dock maximum simultaneous load exceeds the maximum output power of the charging dock 104. In some embodiments, the at least one processor 200 determines whether the charging dock maximum simultaneous load exceeds the maximum output power of the charging dock 104. In some embodiments, the at least one processor 200 compares the charging dock maximum simultaneous load with the maximum output power of the charging dock 104 to determine whether the charging dock maximum simultaneous load exceeds the maximum output power of the charging dock 104.

At operation 708, the server 108 determines one or more adjustments to the one or more charging parameters for one or more of the plurality of devices 110. In some embodiments, the at least one processor 200 determines the one or more adjustments to the one or more charging parameters for one or more of the plurality of devices 110, when the charging dock maximum simultaneous load exceeds the maximum output power of the charging dock 104. Further, the one or more adjustments may minimize an overall charge time to charge all of the plurality of devices 110. Further, the one or more adjustments of the one or more charging parameters may comprise at least power reallocation strategies, time-based charging strategies, or device prioritization.

At operation 710, the server 108 updates, based at least on the one or more adjustments, the one or more charging parameters for a respective device associated with each of the one or more adjustments. In some embodiments, the at least one processor 200 updates the one or more charging parameters for a respective device associated with each of the one or more adjustments, based at least on the one or more adjustments. In some embodiments, the one or more charging parameters may comprise the charging power for each of the plurality of devices 110 and the minimum charging time to charge each of the plurality of devices 110 from the current battery level to the cut-off battery level.

At operation 712, the server 108 adjusts the charging power of each of the plurality of devices 110 as the maximum charging power for each of the plurality of devices 110. In some embodiments, the at least one processor 200 adjusts the charging power of each of the plurality of devices 110 as the maximum charging power for each of the plurality of devices 110, upon determining the charging dock maximum simultaneous load is less than the maximum output power of the charging dock 104. In some embodiments, the at least one processor 200 determines whether the charging dock maximum simultaneous load is less than the maximum output power of the charging dock 104 by comparing the charging dock maximum simultaneous load with the maximum output power of the charging dock,

At operation 714, the server 108 updates, based at least on the adjusted charging power, the one or more charging parameters for the respective device. In some embodiments, the at least one processor 200 updates the one or more charging parameters for a respective device, based at least on the adjusted charging power. In some embodiments, the one or more charging parameters may comprise the charging power for each of the plurality of devices 110 and the minimum charging time to charge each of the plurality of devices 110 from the current battery level to the cut-off battery level.

At operation 716, the server 108 transmits to one or more of the plurality of devices 110 the one or more charging parameters associated with the respective device. In some embodiments, the at least one processor 200 transmits to one or more of the plurality of devices 110 the one or more charging parameters associated with a respective device. In one embodiment, the one or more charging parameters may correspond to the one or more charging parameters associated with the one or more adjustments, when the charging dock maximum simultaneous load exceeds the maximum output power of the charging dock 104. In another embodiment, the one or more charging parameters may correspond to the one or more charging parameters associated with the adjusted charging parameters, when the charging dock maximum simultaneous load is less than the maximum output power of the charging dock 104. In some embodiments, to transmit the one or more charging parameters may include a push of the updated one or more charging parameters from the at least one processor 200 of the server 108 to the one or more of the plurality of devices 110 through the network 102.

The present disclosure streamlines a dynamic power management process for charging the plurality of devices 110 via the charging dock 104. Embodiments of the present disclosure may facilitate intelligent charging of the plurality of devices 110 when connected to corresponding charging slots of the plurality of charging slots 106 of the charging dock 104. Embodiments of the present disclosure may enable optimized power distribution by determining charging parameters of each connected device. Embodiments of the present disclosure may determine a maximum simultaneous load of the charging dock based on the received device parameters via the server 108 communicatively coupled to the charging dock 104. Embodiments of the present disclosure may further enable or disable adjustment of individual charging parameters to ensure the total load remains within the maximum output power of the charging dock 104. Embodiments of the present disclosure may reduce overall charge time by dynamically updating the charging parameters of each device and transmitting the updated parameters to the respective devices.

In another embodiment, the charging dock 104 may also correspond to a modular charging base, such as a FlexDock. The charging dock 104 may be compatible to connect different types of the plurality of devices 110. Each device of the plurality of devices 110 may have distinct charging parameters, and may communicate their charging parameters to the server 108 that manages the overall charging process. Examples of the different types of the plurality of devices 110 may be hand-held barcode scanners, tablets, mobile computers, battery packs etc. The server 108 may receive the charging parameters, determine the charging dock's maximum simultaneous load, and, when necessary, adjust the charging parameters to optimize power distribution across all connected plurality of devices 110. The system 100 thereby enables synchronized control and real-time adjustment of charging behavior for the different types of the plurality of devices 110 through coordinated communication between the server 108 and the plurality of devices 110, ensuring efficient charging within the power limitations of the dock.

Many modifications and other embodiments of the disclosure set forth herein will come to mind to one skilled in the art to which the present disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system comprising:
a charging dock having a plurality of charging slots, wherein each charging slot of the plurality of charging slots is configured to be connected to at least one device of a plurality of devices, wherein each of the plurality of devices has one or more charging parameters; and
a server communicatively coupled to the charging dock, wherein the server comprises:
a memory having one or more computer readable instructions; and
at least one processor communicatively coupled with the memory, wherein the at least one processor executing the one or more computer readable instructions stored in the memory is configured to:
receive one or more device parameters associated with each of the plurality of devices;
determine, based at least on the one or more device parameters, a charging dock maximum simultaneous load, wherein the charging dock maximum simultaneous load is a count of the plurality of devices connected to the charging dock and a maximum charging power for each of the plurality of devices;
determine whether the charging dock maximum simultaneous load exceeds a maximum output power of the charging dock;
determine, when the charging dock maximum simultaneous load exceeds the maximum output power of the charging dock, one or more adjustments to the one or more charging parameters for one or more of the plurality of devices, wherein the one or more adjustments minimize an overall charge time to charge all of the plurality of devices;
update, based at least on the one or more adjustments, the one or more charging parameters for a respective device associated with each of the one or more adjustments; and
transmit to one or more of the plurality of devices the one or more charging parameters associated with a respective device.

2. The system of claim 1, wherein the one or more device parameters comprises a current battery level, a charging status, and a charging slot number for each of the plurality of devices.

3. The system of claim 1, wherein the one or more charging parameters comprise a charging power for each of the plurality of devices and a minimum charging time to charge each of the plurality of devices from a current battery level to a cut-off battery level.

4. The system of claim 3, wherein the at least one processor executing the one or more computer readable instructions stored in the memory is further configured to:
adjust the charging power of each of the plurality of devices as the maximum charging power for each of the plurality of devices on determining the charging dock maximum simultaneous load is less than the maximum output power of the charging dock.

5. The system of claim 3, wherein the at least one processor executing the one or more computer readable instructions stored in the memory is further configured to:
update the one or more charging parameters for the respective device to stop charging of the plurality of devices or set a limited charging power on determining the current battery level is higher than the cut-off battery level.

6. The system of claim 3, wherein the at least one processor executing the one or more computer readable instructions stored in the memory is further configured to:
receive the cut-off battery level or a prioritization scheme for each of the plurality of devices from at least one user.

7. The system of claim 6, wherein the at least one processor executing the one or more computer readable instructions stored in the memory is further configured to:
determine a priority parameter for charging each of the plurality of devices based on the prioritization scheme; and
wherein to update the one or more charging parameters for a respective device associated with each of the one or more adjustments is further based on the priority parameter for charging each of the plurality of devices.

8. The system of claim 1, further comprises one or more power adapters operationally coupled to the charging dock to supply power to the charging dock.

9. A method comprising:
receiving, via at least one processor communicatively coupled with a memory of a server that is communicatively coupled to a charging dock having a plurality of charging slots, one or more device parameters associated with each of a plurality of devices, wherein each charging slot of the plurality of charging slots is configured to be connected to at least one device of a plurality of devices, wherein each of the plurality of devices has one or more charging parameters;
determining, via the at least one processor, based at least on the one or more device parameters, a charging dock maximum simultaneous load, wherein the charging dock maximum simultaneous load is a count of the plurality of devices connected to the charging dock and a maximum charging power for each of the plurality of devices;
determining, via the at least one processor, whether the charging dock maximum simultaneous load exceeds a maximum output power of the charging dock;
determining, via the at least one processor, when the charging dock maximum simultaneous load exceeds the maximum output power of the charging dock, one or more adjustments to the one or more charging parameters for one or more of the plurality of devices, wherein the one or more adjustments minimize an overall charge time to charge all of the plurality of devices;
updating, via the at least one processor, based at least on the one or more adjustments, the one or more charging parameters for a respective device associated with each of the one or more adjustments; and
transmitting, via the at least one processor, to one or more of the plurality of devices the one or more charging parameters associated with a respective device.

10. The method of claim 9, wherein the one or more device parameters comprises a current battery level, a charging status, and a charging slot number for each of the plurality of devices.

11. The method of claim 9, wherein the one or more charging parameters comprise a charging power for each of the plurality of devices and a minimum charging time to charge each of the plurality of devices from a current battery level to a cut-off battery level.

12. The method of claim 11, further comprising adjusting, via the at least one processor, the charging power of each of the plurality of devices as the maximum charging power for each of the plurality of devices on determining the charging dock maximum simultaneous load is less than the maximum output power of the charging dock.

13. The method of claim 11, further comprising updating, via the at least one processor, the one or more charging parameters to stop charging of the plurality of devices or set a limited charging power on determining the current battery level is higher than the cut-off battery level.

14. The method of claim 11, further comprising receiving, via the at least one processor, the cut-off battery level or a prioritization scheme for each of the plurality of devices from at least one user.

15. The method of claim 14, further comprising determining, via the at least one processor, a priority parameter for charging each of the plurality of devices based on the prioritization scheme; and
wherein updating the one or more charging parameters for a respective device associated with each of the one or more adjustments is further based on the priority parameter for charging each of the plurality of devices.
